# EUROPEAN PATENT APPLICATION

(11) **EP 4 751 943 A1**
(43) Date of publication of application: **03.06.2026**
(21) Application number: 25220218.9
(22) Date of filing: 02.12.2025
(51) Int. Cl.: B60G 3/20, B60G 7/00, B62D 35/02

(54) **VEHICLE HAVING SUSPENSIONS WITH VARIABLE SETUP**

(30) Priority: 02.12.2024 IT 202400027222
(71) Applicant: FERRARI S.p.A., 41100 Modena (IT)
(72) Inventor: SANCHEZ GOMEZ, Isaac Joaquin, 41100 Modena (IT); BALLATORE, Marco, 41100 Modena (IT); PAOLINI, Andrea, 41100 Modena (IT)
(74) Representative: Studio Torta S.p.A.

(57) **Abstract**

A vehicle (1) provided with a suspension (7) having an arm (8) having a first end (9I) connected, in use, to a supporting structure (2) and a second end (9II) connected, in use, to a hub holder (6); wherein, the arm (8) has a structural element (10) and an aerodynamic fairing (11), which are reciprocally movable and can be driven depending on the driving condition of the corresponding arm (8) without the use of actuators.

## Description

### CROSS-REFERENCE TO RELATED APPLICATIONS

This patent application claims priority from Italian patent application no. 102024000027222 filed on December 2, 2024, the entire disclosure of which is incorporated herein by reference.

### TECHNICAL FIELD

The invention relates to a vehicle having suspensions with variable setup, specifically a vehicle with passively activated suspension.

### PRIOR ART

It is well known that a vehicle comprises, for each wheel, a suspension whose function is to connect (in a known manner schematically illustrated) the wheel to the chassis. Several types of suspension are known.

In addition, the installation of aerodynamic elements in a vehicle is known and the setup of such elements can vary depending on driving conditions. In particular, an electric vehicle is known to have critical autonomy issues and requires its setup to be varied in order to minimise aerodynamic drag or maximise aerodynamic load, depending on the driving conditions.

Disadvantageously, known aerodynamic elements are driven by actuators, which generally comprise complex mechanisms, increasing both the weight of the vehicle and the cost and complexity of its production.

### DESCRIPTION OF THE INVENTION

The purpose of the present invention is to provide a suspension with variable setup and a vehicle, in particular an electric vehicle, that overcome the drawbacks described above.

According to the present invention, a suspension with variable setup, as described in the attached claims, is provided.

According to this invention, a vehicle, specifically an electric vehicle, is provided, according to what is claimed in the attached claims.

The dependent claims define particular embodiments of the invention.

### BRIEF DESCRIPTION OF THE DRAWINGS

Below, embodiments of the invention are described to better understand the same by way of non-limiting example and with reference to the attached drawings in which:
- Figure 1 is a schematic view, with parts removed for clarity, of a vehicle according to the present invention;
- Figures 2A and 2B illustrate, schematically and with some parts removed for clarity, a detail of Figure 1 in respective different operating configurations;
- Figures 3 and 4 illustrate, schematically and with some parts removed for clarity, details of Figure 2; and
- Figures 5A and 5B schematically illustrate the detail of Figure 2A and 2B, in two respective, different operating configurations.

### EMBODIMENTS OF THE INVENTION

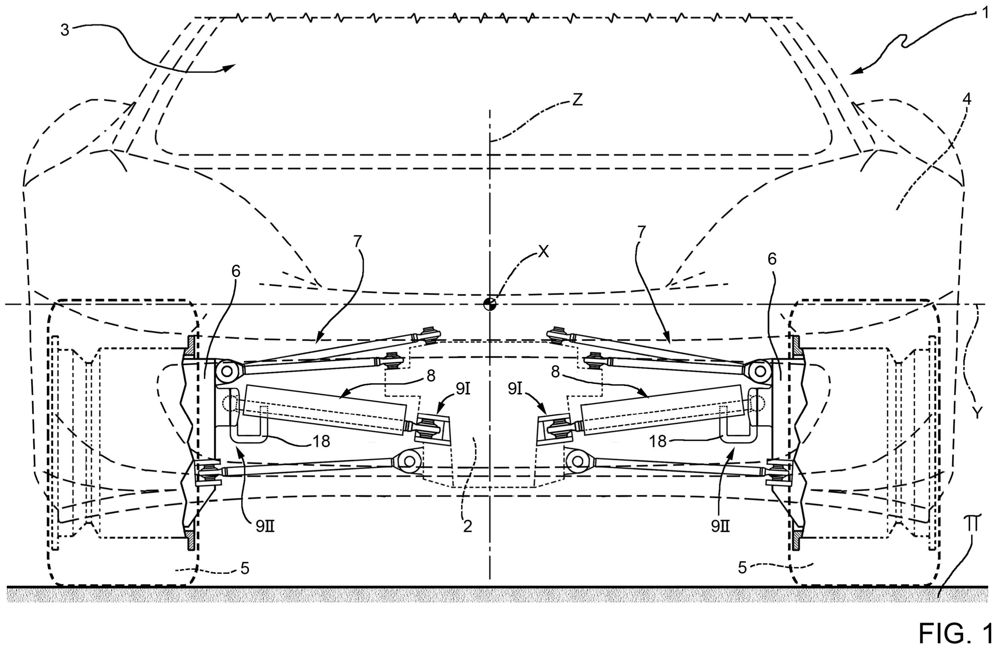

In Figure 1, reference number 1 is used to denote, as a whole, a vehicle comprising, in a known manner: a supporting structure 2 (for example, a body and/or chassis), which defines a passenger compartment 3 configured to accommodate at least one driver and possibly one or more passengers; and a bodywork 4, which externally covers the supporting structure and is attached, in a known manner not illustrated, to the supporting structure 2. In particular, the vehicle 1 is of the electric type.

The vehicle 1 is roto-translating, by means of wheels 5, on a horizontal support plane π. The terms "front", "rear", "right", "left", "top", "bottom" and the like are used with reference to the vehicle 1 moving forward on the support plane π in the forward direction. The terms "exterior", "interior" and the like are used with reference to the space circumscribed by the bodywork 4 of the vehicle 1.

The vehicle 1 further comprises, for each wheel 5: a hub holder 6 and a suspension 7. In a known manner, each wheel 5 is mounted on a respective hub holder 6. Each suspension 7 connects a respective hub holder 6 to the supporting structure 2.

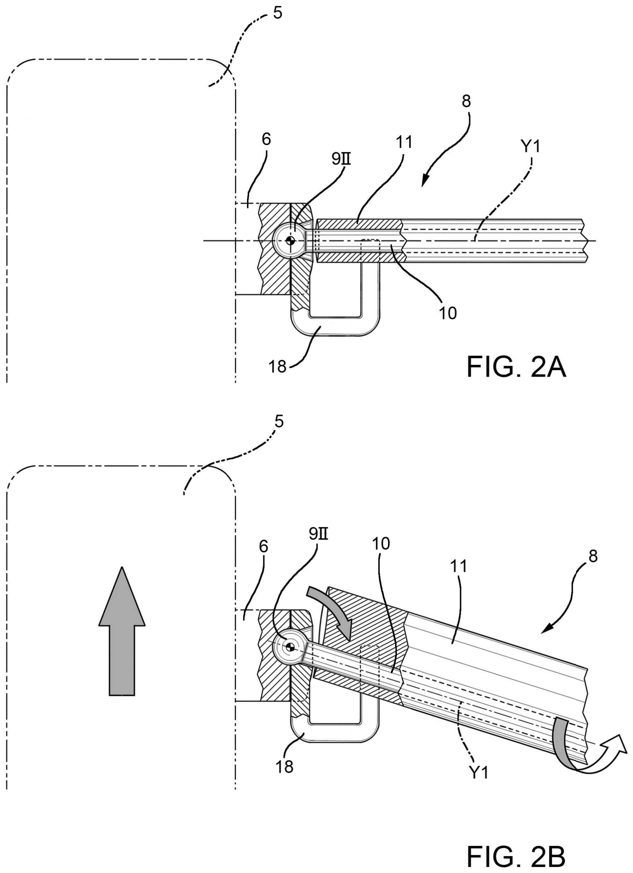

Figure 2A illustrates, by way of non-limiting example, a detail of a suspension 7 according to the present invention. It should be noted that in the following, for simplicity of exposition, reference will be made to a single suspension 7; however, *mutatis mutandis* multiple suspensions 7 may be installed in a vehicle 1.

The suspension 7 may be chosen from within a group of suspensions that differ according to type. For example, the suspension 7 can be of the type generally known as "push rod" or "pull rod". In other words, the type of suspension 7 can vary.

In particular, as illustrated in Figure 1, the suspension 7 comprises an arm 8, which has: an inner end 9I configured to attach, in use, to the supporting structure 2; and an outer end 9II configured to attach, in use, to the respective hub holder 6.

According to a variant not illustrated, the suspension 7 may comprise multiple arms 8. The number, shape, dimensions and reciprocal arrangement of the arms 8 can vary.

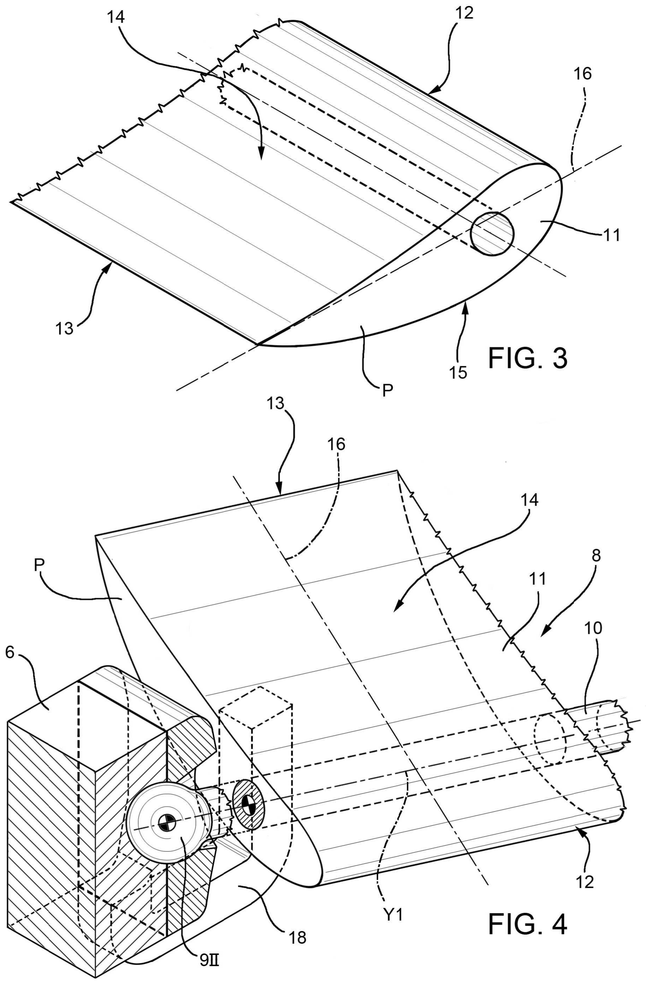

Without loss of generality, the type of connection made between the outer end 9II of the arm 8 and the hub holder 6 can vary. In other words, the connection type can be chosen from a group of different connection types. For example, the connection between the outer end 9II and the hub holder 6 can be made by means of a ball joint (as in the example shown in detail in Figure 4) or by means of ball segments (not shown).

The arm 8 advantageously comprises, in turn, a structural element 10 and an aerodynamic fairing 11 (Figure 4). The aerodynamic fairing 11 is mounted on a respective portion of the structural element 10.

The structural element 10 is configured to resist mechanical stress and ensure the proper operation of the suspension 7. In other words, the structural element 10 is configured to ensure the mechanical performance of the suspension 7.

The shape and size of the structural element 10 can vary. The material from which the structural element 10 is made can vary.

By way of non-limiting example, the structural element 10 is a bar having a longitudinal axis Y1 forming a single body with the outer end 9II, which has the shape of a ball.

The aerodynamic fairing 11 and the structural element 10 are advantageously mutually movable. In particular, the aerodynamic fairing 11 is mounted on the structural element 10 so as to have one or more degrees of freedom with respect to the structural element 10.

According to the example illustrated, the aerodynamic fairing 11 is fitted on the structural element 10. The structural element 10 and the aerodynamic fairing 11 can mutually rotate about the axis Y1. In particular, the aerodynamic fairing 11 is free to rotate around a respective portion of the structural element 10.

According to a variant not illustrated, the structural element 10 and the aerodynamic fairing 11 are mutually translating or roto-translating.

The aerodynamic fairing 11 is a body having an external profile such that it has a certain airfoil P in cross section. The shape and size of the airfoil P can vary.

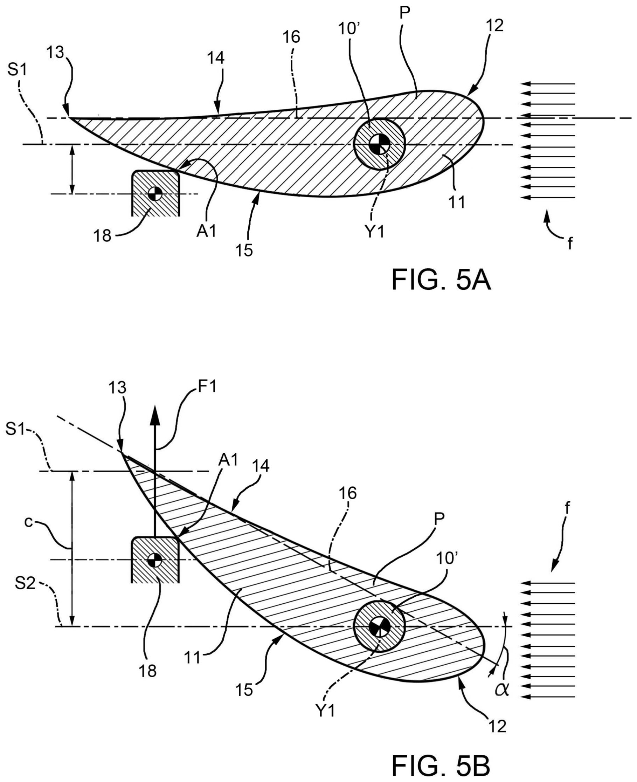

As illustrated in Figures 5A and 5B, in a given cross section at the axis Y1 of the aerodynamic fairing 11, the airfoil P has:
- a leading edge 12, in other words the geometrically most advanced point of the airfoil P with respect to a current f of air;
- a trailing edge 13, in other words the geometrically most retracted point of the airfoil P with respect to the air current f;
- the back 15, in other words the line delimiting the airfoil P at the top with respect to the air current f;
- the belly 14, in other words the line delimiting the airfoil P at the bottom with respect to the air current f;
- the wing chord 16, in other words the line joining the leading edge 12 to the trailing edge 13;
- the angle of incidence α, in other words the angle α formed between the wing chord 16 and the undisturbed air current f.

The shape and size of the aerodynamic fairing 11 (and its respective airfoil) can vary. The aerodynamic fairing 11 can be made of any material. The structural element 10 and the aerodynamic fairing 11 can be made of the same material or of different materials. For example, the structural element 10 can be made of metal and the aerodynamic fairing can be made of composite material.

Advantageously, multiple aerodynamic fairings 11 can be installed on the same structural element 10. In this case, the aerodynamic fairings 11 can be distributed axially or radially with respect to a reference axis.

Advantageously, the arm 8 is configured to come into contact, in use, against an abutment element 18. The arm 8 and the abutment element 18 are mutually movable; in particular, the arm 8 can translate and/or rotate with respect to the abutment element 18.

The shape and size of the abutment element 18 can vary. The abutment element 18 can be installed in any position on the vehicle 1 in the vicinity of the arm 8. For example, the abutment element 18 can be optionally attached to: the hub holder 6; the supporting structure 2; the bodywork 4; or the damper (not shown).

The abutment element 18 is configured to apply an actuating force F1 at a contact zone A1 of the arm 8 on the arm 8.

In use, the arm 8 is fixed to the hub holder 6 and bends and/or lowers and/or raises during the travel of the vehicle 1, depending on the driving conditions in that instant. In particular (Figures 5A and 5B), the portion 10' of the structural element 10 configured to cooperate with the abutment element 18 may perform a vertical stroke c, relative to the abutment element 18, which is bounded by an upper maximum point S1 to a lower minimum point S2.

According to the example illustrated in Figure 5A, when the portion 10' is raised (upper maximum point S1) the aerodynamic fairing 11 is arranged so that the wing chord 16 is aligned with the air current f, minimising drag.

According to the example illustrated in Figures 5B, when the portion 10' is lowered (lowest minimum point S2) the aerodynamic fairing 11 rotates and the wing chord 16 forms an angle of incidence α. In this configuration, the aerodynamic load on the suspension 7 is increased compared to the configuration shown in Figure 5A.

Advantageously, from the above, in the arm 8, the displacement of a portion 10' of the structural element 10 with respect to an abutment element 18 is utilised to move the aerodynamic fairing 11 and the structural element 10 reciprocally. According to the example illustrated in Figures 5A and 5B, the portion 10' is shifted vertically in relation to the abutment element 18. According to a variant not illustrated, the arm 8 can also utilise any horizontal (right-left) displacement between the portion 10' of the structural element 10 and the abutment element 18.

According to a variant not illustrated, the suspension 7 comprises multiple arms 8. In this case, advantageously, the actuation of the aerodynamic fairing 11 of one arm 8 can cause, in a chain reaction, the actuation of the aerodynamic fairings 11 of the other arms 8. The actuation between two or more aerodynamic fairings 11 of a suspension 7 can occur by direct contact and/or through an aerodynamic load.

Advantageously, the displacement of the aerodynamic fairing 11 of an arm 8 can be used to direct, in use, the air current f in a given direction.

Advantageously, the solution of the type described above makes it possible to utilise the vertical and/or horizontal displacement and/or bending of a portion 10' of a structural element 10 with respect to an abutment element 18 to move, in particular rotate, one or more aerodynamic fairings 11.

Advantageously, the actuation of the aerodynamic fairings 11 makes it possible: to improve the performance of the vehicle 1 (by increasing or cancelling the aerodynamic load depending on the driving conditions in each instant); and/or to direct the air current f in certain directions in order to obtain possible further advantages such as, for example, the cooling of certain areas or the aerodynamic actuation of other actuators downstream of the aerodynamic fairings 11.

The solution of the type described above makes it possible to optimise the performance of a vehicle 1, in particular an electric vehicle 1, without the use of mechanical drives with their associated mechanisms. This represents a clear advantage in terms of weight reduction and production costs.

## Claims

1. A suspension for a vehicle (1) comprising a supporting structure (2) and a hub holder (6); wherein, the suspension (7) comprises an arm (8) which has a first end (9I) and a second end (9II); wherein, the first end (9I) is connected, in use, to the supporting structure (2) of the vehicle (1); wherein, the second end (9II) is connected, in use, to the hub holder (6) of the vehicle (1); wherein, said arm (8) comprises a structural element (10) and an aerodynamic fairing (11), which is mounted on a respective portion of the structural element (10); wherein, the structural element (10) and the aerodynamic fairing (11) are reciprocally movable.

2. A suspension according to claim 1, wherein the structural element (10) is a bar, which has a longitudinal axis (Y1) and is interposed between the first end (9I) and the second end (9II) of the suspension (7); in particular, the structural element (10) forms a single piece with the first end (9I) and the second end (9II).

3. A suspension according to claim 1 or 2, wherein the aerodynamic fairing (11) is fitted on a respective portion of the structural element (10); in particular, the aerodynamic fairing (11) rotates around a respective portion of the structural element (10).

4. A suspension according to any one of the preceding claims, wherein said arm (8) can comprise a plurality of aerodynamic fairings (11); in particular, with respect to a reference axis, a plurality of aerodynamic fairings (11) can be flanked and/or spaced radially apart from one another.

5. A suspension according to any preceding claim and comprising a plurality of said arms (8).

6. A suspension according to claim 5, wherein two or more arms (8) are configured to cause, in use, the reciprocal displacement of their aerodynamic fairings (11) by direct contact and/or through aerodynamic loading.

7. A vehicle comprising a supporting structure (2), a hub holder (6) and a suspension (7) according to any preceding claim; wherein said suspension (7) comprises an arm (8) which has a first end (9I) which is connected, in use, to the supporting structure (2) and a second end (9II) which is connected, in use, to the hub holder (6).

8. A vehicle according to claim 7, wherein said second end (9II) is configured to move along a given path; the vehicle (1) comprising an abutment element (18) which is configured to come into contact against the suspension (7) when said second end (9II) reaches a certain position along said path; wherein said abutment element (18) is fixed.

9. A vehicle according to claim 8 and comprising a bodywork (4) and a damper; wherein the abutment element (18) is fixed to the supporting structure (2) or to the hub holder or to the bodywork (4) or to the damper.

10. A vehicle according to any one of claims 7 to 9, wherein said suspension (7) is configured to change the reciprocal position between an aerodynamic fairing (11) and a respective structural element (10) without the use of actuators.
